# FASCICULE DE BREVET EUROPEEN

(11) **EP 2 716 928 B1**
(45) Date de publication et mention de la délivrance du brevet: **10.06.2015**
(21) Numéro de dépôt: 13354031.0
(22) Date de dépôt: 27.08.2013
(51) Int. Cl.: F16D 11/14, B61B 12/10

(54) **Dispositif d'entraînement d'une poulie destinée à entraîner un câble de traction d'un téléphérique, notamment un télésiège ou télécabine**
Antriebseinrichtung für Seilrolle zum Antreiben eines Zugseils einer Seilbahn, insbesondere für Sessellift oder Kabinenbahn
Pulley drive device for cable traction of a cable railway, in particular skilift or cable car

(30) Priorité: 02.10.2012 FR 1202613
(43) Date de publication de la demande: 09.04.2014
(73) Titulaire: POMA, 38340 Voreppe (FR)
(72) Inventeur: Lucas, Grégory, F-38120 Saint-Egrève (FR); Schenten, Alain, F-38470 L'Albenc (FR)
(74) Mandataire: Hecké, Gérard

(56) Documents cités:
- EP-A2- 0 237 124
- FR-A1- 2 969 565
- GB-A- 2 167 373
- US-A- 3 830 349
- US-A1- 2007 227 849
- "EISENBEISS-ANTRIEBSKUPPLUNG FUER PENKENBAHN", INTERNATIONALE SEILBAHN RUNDSCHAU.REVUE INTERNATIONALE DES TELEPHERIQUES, BOHMANN, WIEN, AT, no. 2, 1 mars 1996 (1996-03-01), page 14, XP000558195,

## Description

### Domaine technique de l'invention

L'invention concerne l'entraînement d'une poulie destinée à entraîner un câble de traction d'un téléphérique, notamment un télésiège ou télécabine.

### État de la technique

Actuellement, les câbles aériens des téléphériques, tels des remontées mécaniques du type télésiège ou télécabine, sont entraînés par une poulie motrice mise en mouvement par un moteur d'entraînement. Les remontés mécaniques peuvent également comprendre un deuxième moteur pour garantir l'entraînement de la poulie motrice. De manière générale, chacun des moteurs est couplé à un arbre d'entraînement de la poulie motrice par l'intermédiaire d'un système de transmission débrayable. Ainsi, une station d'embarquement dédiée à entraîner la poulie motrice comporte deux moteurs couplés respectivement à deux systèmes de transmission débrayables. On peut citer par exemple la demande de brevet européen EP0237124 qui divulgue un dispositif d'accouplement pour entraîner des poulies d'un transporteur aérien à câbles. Ces systèmes de transmission sont complexes et nécessitent des étapes de maintenance qui peuvent être longues, privant les usagers d'utiliser la remontée mécanique pendant un certain temps.

### Objet de l'invention

L'objet de l'invention consiste à remédier à ces inconvénients, et plus particulièrement à fournir un dispositif d'entraînement d'un câble de traction d'un téléphérique qui soit plus simple d'utilisation, notamment pour offrir une sécurité et une fiabilité améliorée du transport des personnes.

Selon un aspect de l'invention, il est proposé un dispositif d'entraînement d'une poulie destinée à entraîner un câble de traction d'un téléphérique, notamment un télésiège ou télécabine, comprenant un moteur principal pouvant entraîner en rotation un arbre principal muni d'un premier pignon, un moteur secondaire pouvant entraîner en rotation un arbre secondaire muni d'un deuxième pignon, et un moyen de transmission de couple moteur comportant une couronne d'entraînement montée sur la poulie.

Le moyen de transmission comporte un troisième pignon engrenant la couronne d'entraînement de la poulie, le troisième pignon étant mobile en translation entre une première position dans laquelle le troisième pignon est engrené par le premier pignon et une deuxième position dans laquelle le troisième pignon est engrené par le deuxième pignon, le moyen de transmission comportant plusieurs barres de guidage et le troisième pignon est solidaire d'un cylindre creux intermédiaire comportant une paroi munie de plusieurs évidements pour le coulissement de la barre de guidage.

Ainsi on fournit un dispositif ayant un unique système de transmission pour transmettre un couple moteur à la poulie à partir d'un ou plusieurs moteurs. Un tel dispositif d'entraînement est simple d'utilisation et nécessite peu de réglages et un nombre d'étapes de calibration réduit.

Le troisième pignon peut être dans une position intermédiaire dans laquelle le troisième pignon est engrené simultanément par les premier et deuxième pignons.

On augmente ainsi facilement le couple moteur fourni à la poulie motrice.

Le troisième pignon peut comporter une première couronne de dentures internes pour s'engrener avec le premier pignon, et une deuxième couronne de dentures internes pour s'engrener avec le deuxième pignon.

Le troisième pignon peut comporter une couronne de dentures externes pour engrener la couronne d'entraînement de la poulie.

L'arbre principal et l'arbre secondaire sont coaxiaux et le troisième pignon est mobile en translation le long des arbres principal et secondaire.

Le dispositif peut en outre comprendre un organe de roulement monté sur le deuxième pignon, le premier pignon ayant une partie en saillie logée à l'intérieur de l'organe de roulement.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1, illustre schématiquement un mode de réalisation d'un dispositif d'entraînement d'une poulie selon l'invention ; et
- les figures 2 et 3, illustrent schématiquement deux vues en coupe d'un moyen de transmission de couple moteur selon l'invention.

### Description détaillée

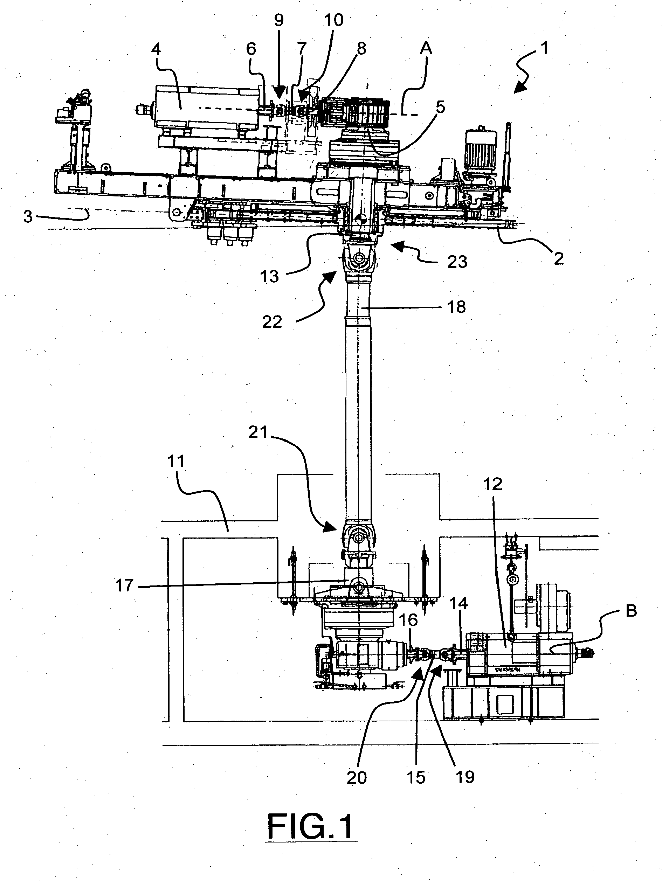

Sur la figure 1, on a représenté de façon schématique un dispositif d'entraînement 1 d'une poulie 2 motrice destinée à entraîner un câble 3 de traction d'un téléphérique.

De manière classique, dans une installation de remontée mécanique, le câble 3 auquel sont attachés des véhicules (cabines, sièges, funiculaire) transportant les passagers est entraîné par la poulie motrice 2. Le dispositif d'entraînement 1 comporte un moteur principal 4 pouvant entraîner en rotation un arbre principal 5 destiné à fournir un couple du moteur principal 4 à la poulie motrice 2. Le moteur principal 4 peut être un moteur thermique ou électrique. Il peut entraîner l'arbre principal 5, soit directement, soit par l'intermédiaire d'arbres intermédiaires 6 à 8. Comme illustré sur la figure 1, le moteur principal 4 entraîne directement le premier arbre intermédiaire 6. Le premier arbre intermédiaire 6 entraîne les deuxième et troisième arbres intermédiaires 7, 8. Les arbres intermédiaires 6 à 8 sont globalement coaxiaux selon un axe principal A. En utilisation normale de l'installation de remontée mécanique, l'axe principal A est sensiblement parallèle au sol 11. Les arbres intermédiaires 6 à 8 peuvent être également décalés les uns par rapport aux autres par l'intermédiaire de premier et deuxième cardans 9,10 situés respectivement à chaque extrémité du deuxième arbre intermédiaire 7. Par ailleurs, le troisième arbre intermédiaire 8 est sensiblement perpendiculaire à l'arbre principal 5. En utilisation normale, l'arbre principal 5 s'étend globalement perpendiculairement au sol 11.

Le dispositif 1 comporte en outre un moteur secondaire 12 pouvant entraîner en rotation un arbre secondaire 13 destiné à fournir un couple du moteur secondaire 12 à la poulie motrice 2. Le moteur secondaire 12 peut être un moteur thermique ou électrique. Il peut entraîner l'arbre secondaire 13, soit directement, soit par l'intermédiaire d'arbres primaires 14 à 16 et d'arbres auxiliaires 17, 18. Comme illustré sur la figure 1, le moteur secondaire 12 entraîne directement le premier arbre primaire 14. Le premier arbre primaire 14 entraîne les deuxième et troisième arbres primaires 15, 16. Les arbres primaires 14 à 16 sont globalement coaxiaux selon un axe secondaire B. En utilisation normale de l'installation de remontée mécanique, l'axe secondaire B est sensiblement parallèle au sol 11. Les arbres primaires 14 à 16 peuvent être également décalés les uns par rapport aux autres par l'intermédiaire de troisième et quatrième cardans 19, 20 situés respectivement à chaque extrémité du deuxième arbre primaire 15. Par ailleurs, le troisième arbre primaire 16 est sensiblement perpendiculaire au premier arbre auxiliaire 17. Le troisième arbre primaire 16 entraîne en rotation le premier arbre auxiliaire 17 qui entraîne, quant à lui, le deuxième arbre auxiliaire 18. Les arbres auxiliaires 17, 18 sont sensiblement coaxiaux et s'étendent globalement perpendiculairement au sol 11. En outre, le deuxième arbre auxiliaire 18 comprend des cinquième et sixième cardans 21, 22 situés respectivement à ses extrémités. Le cinquième cardan 21 permet de coupler le deuxième arbre auxiliaire 18 au premier arbre auxiliaire 17, et le sixième cardan 22 permet de coupler le deuxième arbre auxiliaire 18 à l'arbre secondaire 13. L'arbre secondaire 13 s'étend globalement perpendiculairement au sol 11, et est coaxial à l'arbre principal 5.

Le dispositif d'entraînement 1 comporte également un moyen de transmission 23 d'au moins un couple moteur à la poulie motrice 2. En particulier le moyen de transmission 23 est configuré pour transmettre, soit le couple du moteur principal 14 à la poulie motrice 2, soit le couple du moteur secondaire 12 à la poulie motrice 2, soit les deux couples simultanément.

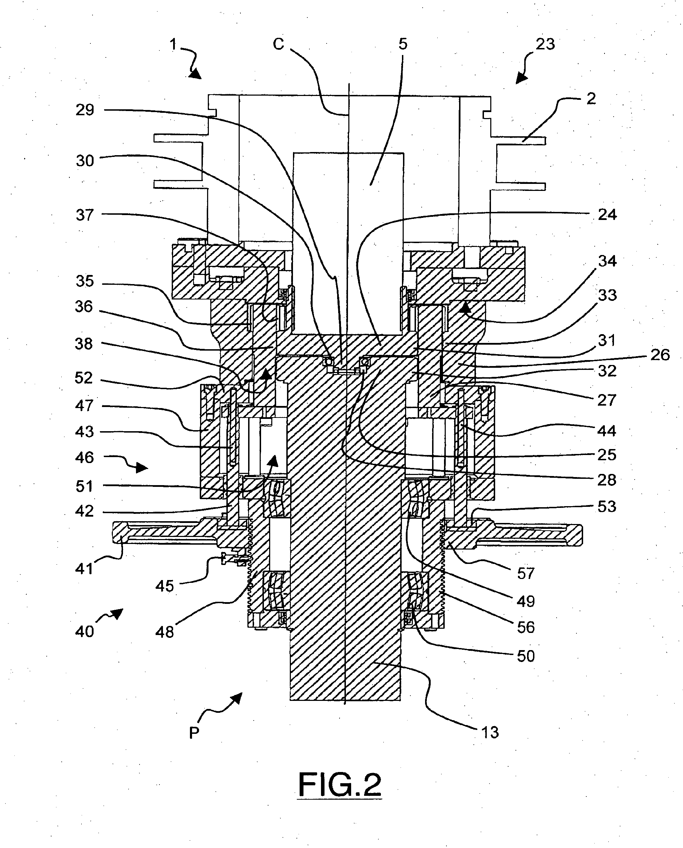

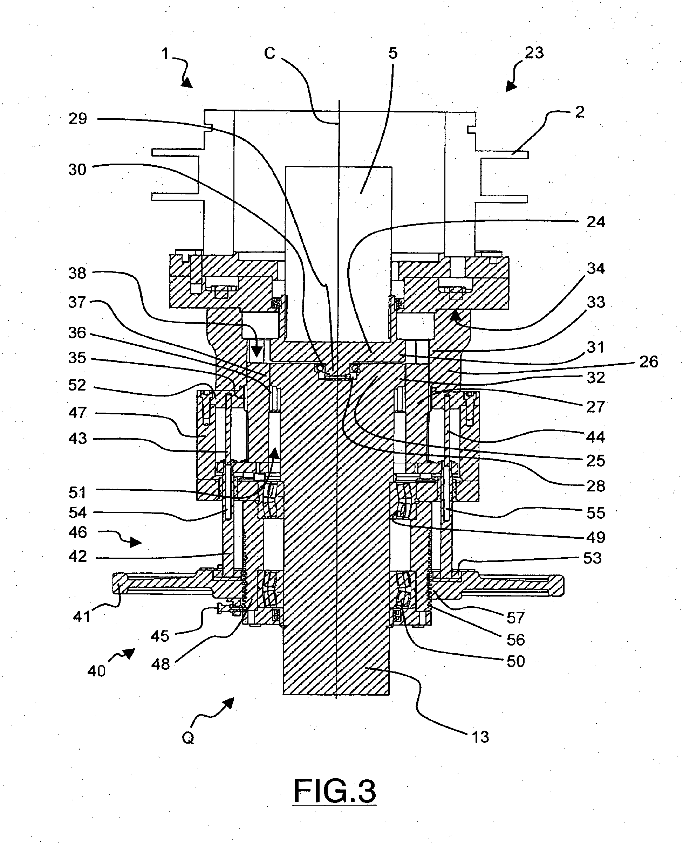

Sur les figures 2 et 3, on a représenté deux vues en coupe du moyen de transmission 23 de couple moteur du dispositif d'entraînement 1 tel que défini à la figure 1. On a également reporté sur les figures 2 et 3 les références de certains éléments décrits à la figure 1. Le moyen de transmission 23 comporte un premier pignon 24 monté fixe sur l'arbre principal 5, un deuxième pignon 25 monté fixe sur l'arbre secondaire 13, une couronne d'entraînement 26 montée fixe sur la poulie motrice 2, et un troisième pignon 27 monté mobile. En particulier, le premier pignon 24 est monté à une extrémité de l'arbre principal 5 opposée à l'extrémité couplée au troisième arbre intermédiaire 8. Le deuxième pignon 25 est quant à lui monté à une extrémité de l'arbre secondaire 13 opposée à l'extrémité couplée au deuxième arbre auxiliaire 18. L'arbre principal 5 et l'arbre secondaire 13 sont coaxiaux selon un axe C s'étendant sensiblement perpendiculairement au sol 11. Chaque arbre 5, 13 est entraîné en rotation par le moteur 4, 12 auquel il est couplé. Chaque arbre 5,13 peut avoir une vitesse de rotation propre. En outre un arbre 5,13 peut être entraîné en rotation tandis que l'autre est immobile. Selon un autre mode de réalisation, les deux arbres peuvent être entraînés en rotation à la même vitesse. En outre, le sens de rotation de l'arbre principal 5 peut être identique ou inverse par rapport à celui de l'arbre secondaire 13. En particulier, le deuxième pignon 25 comporte un logement 28 centré sur l'axe C et le premier pignon 24 comporte une partie cylindrique 29 centrée sur l'axe C faisant saillie dans le logement 28 du deuxième pignon. Le dispositif d'entraînement 1 peut en outre comporter un roulement 30 monté dans le logement 28 du deuxième pignon 25 et autour de la partie cylindrique 29 du premier pignon 24 afin de faciliter la rotation de l'arbre principal 5 par rapport à l'arbre secondaire 13. Les premier et deuxième pignons 24, 25 ont une forme globalement cylindrique et possèdent respectivement des dentures externes 31, 32 situées sur leurs circonférences externes. La couronne d'entraînement 26 a la forme globale d'un cylindre creux et possède des dentures internes 33 situées sur sa circonférence interne. La couronne d'entraînement 26 comporte en outre une première face 34 montée fixe sur la poulie motrice 2. Le troisième pignon 27 a la forme globale d'un cylindre creux, il comporte des dentures externes 35 situées sur sa circonférence externe et configurées pour coopérer avec les dentures internes 33 de la couronne d'entraînement 26 afin d'engrener celle-ci. En outre, le troisième pignon 27 comporte, sur sa circonférence interne, une première couronne de dentures internes 36 et une deuxième couronne de dentures internes 37.

Le moyen de transmission 23 comporte également un compartiment 38 pour permettre un déplacement longitudinal du troisième pignon 27, c'est-à-dire un déplacement en translation le long de l'axe C des arbres principal et secondaire 5, 13. Le compartiment 38 est situé entre les dentures externes 31, 32 des premier et deuxième pignons 24, 25 et les dentures internes 33 de la couronne d'entraînement 26. Le troisième pignon 27 est mobile en translation le long de l'axe C, entre une première position P dans laquelle il permet à l'arbre principal 5 d'entraîner en rotation la poulie motrice 2, et une deuxième position Q dans laquelle il permet à l'arbre secondaire 13 d'entraîner en rotation la poulie motrice 2. En outre, le troisième pignon 27 peut également être dans une position intermédiaire dans laquelle il permet à l'arbre principal 5 et à l'arbre secondaire 13 d'entraîner simultanément en rotation la poulie motrice 2.

Sur la figure 2, on a représenté le troisième pignon 27 dans la première position P, dans laquelle, les dentures internes 36 de la première couronne du troisième pignon 27 coopèrent avec les dentures externes 31 du premier pignon 24, et le premier pignon 24 engrène le troisième pignon 27. En outre, les dentures internes 37 de la deuxième couronne du troisième pignon 27 ne coopèrent avec aucune dentures des premier et deuxième pignons 24, 25. Dans la première position P, le moyen de transmission 23 permet de faire transiter le couple du moteur principal 4 par successivement, l'arbre principal 5, le premier pignon 24, le troisième pignon 27, la couronne d'entraînement 26 et la poulie motrice 2.

Sur la figure 3, on a représenté le troisième pignon 27 dans la deuxième position Q, dans laquelle, les dentures internes 37 de la deuxième couronne du troisième pignon 27 coopèrent avec les dentures externes 32 du deuxième pignon 25, et le deuxième pignon 25 engrène le troisième pignon 27. En outre, les dentures internes 36 de la première couronne du troisième pignon 27 ne coopèrent avec aucune dentures des premier et deuxième pignons 24, 25. Dans la deuxième position Q, le moyen de transmission 23 permet de faire transiter le couple du moteur secondaire 12 par successivement, l'arbre secondaire 13, le deuxième pignon 25, le troisième pignon 27, la couronne d'entraînement 26 et la poulie motrice 2.

Le moyen de transmission 23 comporte en outre des moyens de déplacement 40 configurés pour déplacer, en translation le long de l'axe C et au sein du compartiment 38, le troisième pignon 27 entre les première et deuxième positions P, Q. Les moyens de déplacement 40 comprennent un disque creux 41, un cylindre creux intermédiaire 42, plusieurs barres de guidage 43, 44, une goupille 45 et un double cylindre creux 46. Le double cylindre creux 46 est monté fixe sur la couronne d'entraînement 26 et entoure l'arbre secondaire 13. Le double cylindre creux 46 comporte un cylindre creux supérieur 47 monté fixe sur la deuxième face de la couronne d'entraînement 26, et un cylindre creux inférieur 48 ayant un diamètre externe inférieur au diamètre externe du cylindre creux supérieur 47. Le moyen de transmission 23 comporte également des paliers 49, 50 pour permettre une rotation du double cylindre creux 46 par rapport à l'arbre secondaire 13. Les paliers 49, 50 sont montés fixes sur la partie interne du cylindre creux inférieur 48. Le cylindre creux supérieur 47 délimite un espace interne 51 contigu au compartiment 38. Les barres de guidage 43, 44 sont montées fixes sur une extrémité 52 du cylindre creux supérieur 47 et s'étendent longitudinalement dans l'espace interne 51. Ainsi, le double cylindre creux 46 et les barres de guidage 43, 44 sont solidaires de la couronne d'entraînement 26 et se déplacent en rotation autour de l'axe C lorsque la couronne d'entraînement 26 est entraînée en rotation autour de l'axe C.

Par ailleurs, le cylindre creux intermédiaire 42 possède une première extrémité montée fixe sur le troisième pignon 27 et une deuxième extrémité libre située dans un évidement 53 prévu sur une face du disque creux 41. En d'autres termes, l'ensemble comprenant le cylindre creux intermédiaire 42 et le troisième pignon 27 est mobile en translation le long de l'axe C. En outre, le cylindre creux intermédiaire 42 possède une paroi comportant plusieurs évidements 54, 55 pour un glissement des barres de guidage 43, 44 afin de guider le cylindre creux intermédiaire 42 en translation le long de l'axe C.

Lorsqu'on souhaite déplacer le troisième pignon 27 en translation d'une position à l'autre, le moteur principal 4 et le moteur secondaire 12 sont arrêtés. Dans le cas où les moteurs 4, 12 sont arrêtés, on déplace, de façon manuelle où à l'aide d'un troisième moteur non représenté sur les figures à des fins de simplification, le troisième pignon 27 à l'aide notamment du disque creux 41. Afin de faciliter le déplacement en translation du troisième pignon 27, le cylindre creux inférieur 48 possède un filetage externe 56 qui coopère avec un filetage interne 57 situé sur la circonférence interne du disque creux 41. Le disque creux 41 se déplace en rotation autour du cylindre creux inférieur 48, et grâce à la coopération des filetages externe 56 et interne 57, le disque creux 41 se déplace simultanément en translation le long de l'axe C. Ainsi, lorsque le disque creux 41 est animé en rotation selon un premier sens de rotation, le disque creux 41 se déplace vers l'arbre principal 5 et déplace en translation le cylindre creux intermédiaire 42 le long de l'axe C et vers l'arbre principal 5. Dans ce cas, le troisième pignon 27 se déplace en translation le long de l'axe C depuis la deuxième position Q vers la première position P. Par ailleurs, lorsque le disque creux 41 est animé en rotation selon un deuxième sens de rotation inverse par rapport au premier sens de rotation, le disque creux 41 se déplace en translation vers l'arbre secondaire 13 et le cylindre creux intermédiaire 42 se déplace en translation vers l'arbre secondaire 13 par l'effet de la gravité. Dans ce cas, le troisième pignon 27 se déplace en translation le long de l'axe C depuis la première position P vers la deuxième position Q. L'évidement 53 prévu sur une face du disque creux 41 autorise la rotation du disque creux 41 autour de l'axe C tout en permettant un déplacement simultané du disque creux 41 en translation le long de l'axe C. La goupille 45 permet de maintenir le troisième pignon 27 dans une position parmi les trois positions possibles, la première P, la deuxième Q et la position intermédiaire.

La position intermédiaire du troisième pignon 27, non représentée à des fins de simplification, est une position dans laquelle les dentures internes 36 de la première couronne du troisième pignon 27 coopèrent avec les dentures externes 32 du deuxième pignon 25 et les dentures internes 37 de la deuxième couronne du troisième pignon 27 coopèrent avec les dentures externes 31 du premier pignon 24. Dans la position intermédiaire, les premier et deuxième pignons 24, 25 engrènent simultanément le troisième pignon 27. Dans la position intermédiaire, le moteur principal 4 et le moteur secondaire 12 peuvent être en fonctionnement simultanément. Dans ce cas, l'arbre principal 5 et l'arbre secondaire 13 tournent autour de l'axe C à la même vitesse, dans le même sens de rotation, et les couples des deux moteurs sont transmis simultanément à la poulie 2.

Par exemple, en fonctionnement normal, le moteur principal 4 est en fonctionnement et le moteur secondaire 12 est à l'arrêt. Le troisième pignon 27 est dans la première position P, et le moteur principal 4 entraîne en rotation la poulie motrice 2. Lorsqu'on souhaite arrêter le moteur principal 4, soit pour des raisons de maintenance soit pour un défaut de fonctionnement, tout en souhaitant garantir l'entraînement en rotation de la poulie motrice 2, on arrête le moteur principal 4, on déplace le troisième pignon 27 dans la deuxième position Q, puis on démarre le moteur secondaire 12.

Avantageusement, on peut, à partir de la première position P, ou à partir de la deuxième position Q, déplacer le troisième pignon 27 dans la position intermédiaire afin d'ajouter un couple moteur à la poulie motrice 2. Dans la position intermédiaire, les deux moteurs 5, 12 fournissent deux couples moteurs à la poulie motrice 2.

Grâce au dispositif d'entraînement qui vient d'être décrit, on offre un moyen pour garantir une rotation de la poulie motrice d'un téléphérique lorsque le moteur principal est à l'arrêt.

## Revendications

1. Dispositif d'entraînement d'une poulie (2) destinée à entraîner un câble de traction d'un téléphérique, notamment un télésiège ou télécabine, comprenant un moteur principal pouvant entraîner en rotation un arbre principal (5) muni d'un premier pignon (24), un moteur secondaire pouvant entraîner en rotation un arbre secondaire (13) muni d'un deuxième pignon (25), un moyen de transmission (23) de couple moteur comportant une couronne d'entraînement (26) montée sur la poulie (2), l'arbre principal (5) et l'arbre secondaire (13) étant coaxiaux selon un axe (C), et le moyen de transmission (23) comportant un troisième pignon (27) engrenant la couronne d'entraînement (26) de la poulie (2), le troisième pignon (27) étant mobile en translation le long de l'axe (C) entre une première position (P) dans laquelle le troisième pignon (27) est engrené par le premier pignon (24) et une deuxième position dans laquelle le troisième pignon (27) est engrené par le deuxième pignon (25), **caractérisé en ce que** le moyen de transmission (23) comporte plusieurs barres de guidage (43, 44) solidaires de la couronne d'entraînement (26) et s'étendant le long de l'axe (C), et le troisième pignon (27) est solidaire d'un cylindre creux intermédiaire (42) comportant une paroi munie de plusieurs évidements (54, 55) pour le coulissement des barres de guidage (43, 44) afin de guider le cylindre creux intermédiaire (42) en translation le long de l'axe (C).

2. Dispositif selon la revendication 1, dans lequel le troisième pignon (27) peut être dans une position intermédiaire dans laquelle le troisième pignon (27) est engrené simultanément par les premier et deuxième pignons (24, 25).

3. Dispositif selon la revendication 1 ou 2, dans lequel le troisième pignon (27) comporte une première couronne de dentures internes (36) pour s'engrener avec le premier pignon (24), et une deuxième couronne de dentures internes (37) pour s'engrener avec le deuxième pignon (25).

4. Dispositif selon l'une des revendications 1 à 3, dans lequel le troisième pignon (27) comporte une couronne de dentures externes (35) pour engrener la couronne d'entraînement (26) de la poulie (2).

5. Dispositif selon l'une des revendications 1 à 4, comprenant un organe de roulement (30) monté sur le deuxième pignon (25), le premier pignon (24) ayant une partie en saillie (29) logée à l'intérieur de l'organe de roulement (30).

## Patentansprüche

1. Vorrichtung zum Antreiben einer Rolle (2), die dazu bestimmt ist, ein Zugseil einer Seilbahn, insbesondere einer Sessel- oder Kabinenbahn, anzutreiben, mit einem Hauptmotor, der eine mit einem ersten Ritzel (24) versehene Hauptwelle (5) in Drehung antreiben kann, einen Zweitmotor, der eine mit einem zweiten Ritzel (25) versehene Zweitwelle (13) in Drehung antreiben kann, ein Motormoment-Übertragungsmittel (23), das einen an die Rolle (2) montierten Antriebskranz (26) umfasst, wobei die Hauptwelle (5) und die Zweitwelle (13) entsprechend einer Achse (C) koaxial sind, und wobei das Übertragungsmittel (23) ein drittes Ritzel (27) umfasst, das in den Antriebskranz (26) der Rolle (2) eingreift, wobei das dritte Ritzel (27) entlang der Achse (C) zwischen einer ersten Position (P), in der das dritte Ritzel (27) mit dem ersten Ritzel (24) im Eingriff ist, und einer zweiten Position, in der das dritte Ritzel (27) mit dem zweiten Ritzel (25) im Eingriff ist, translationsbeweglich ist, **dadurch gekennzeichnet, dass** das Übertragungsmittel (23) mehrere Führungsstangen (43, 44) umfasst, die fest verbunden sind mit dem Antriebskranz (26) und sich entlang der Achse (C) erstrecken, und wobei das dritte Ritzel (27) fest verbunden ist mit einem Zwischenhohlzylinder (42), der eine Wand aufweist, die mit mehreren Aussparungen (54, 55) zum Gleiten der Führungsstangen (43, 44) versehen ist, um den Zwischenhohlzylinder (42) translatorisch entlang der Achse (C) zu führen.

2. Vorrichtung nach Anspruch 1, bei der das dritte Ritzel (27) in einer Zwischenposition sein kann, in der das dritte Ritzel (27) gleichzeitig mit dem ersten und zweiten Ritzel (24, 25) im Eingriff ist.

3. Vorrichtung nach Anspruch 1 oder 2, bei der das dritte Ritzel (27) einen ersten Kranz mit Innenverzahnungen (36) umfasst, um in das erste Ritzel (24) einzugreifen, und einen zweiten Kranz mit Innenverzahnungen (37) um in das zweite Ritzel (25) einzugreifen.

4. Vorrichtung nach einem der Ansprüche 1 bis 3, bei der das dritte Ritzel (27) einen Kranz mit Außenverzahnungen (35) umfasst, um in den Antriebskranz (26) der Rolle (2) einzugreifen.

5. Vorrichtung nach einem der Ansprüche 1 bis 4, die ein Gleitelement (30) umfasst, das auf das zweite Ritzel (25) montiert ist, wobei das erste Ritzel (24) einen hervorstehenden Bereich (29) hat, der im Gleitelement (30) untergebracht ist.

## Claims

1. Driving device for a pulley (2) intended to drive a hauling cable of a cableway, in particular a chair lift or a gondola lift, including a main motor able to rotatingly drive a main shaft (5) provided with a first pinion (24), a secondary motor able to rotatingly drive a secondary shaft (13) provided with a second pinion (25), a driving torque transmission means (23) comprising a driving crown (26) mounted on the pulley (2), the main shaft (5) and the secondary shaft (13) being coaxial with an axis (C), and the transmission means (23) comprising a third pinion (27) in mesh with the driving crown (26) of the pulley (2), the third pinion (27) being mobile in translation along the axis (C) between a first position (P) in which the third pinion (27) is in mesh with the first pinion (24) and a second position in which the third pinion (27) is in mesh with the second pinion (25), **characterized in that** the transmission means (23) comprises several guiding bars (43, 44) integral with the driving crown (26) and extending along the axis (C), and the third pinion (27) is integral with an intermediate hollow cylinder (42) comprising a wall provided with several recesses (54, 55) for a sliding of the guiding bars (43, 44) in order to guide the intermediate hollow cylinder (42) in translation along the axis (C).

2. Device according to claim 1, wherein the third pinion (27) can be in an intermediate position in which the third pinion (27) is in mesh both with the first and second pinions (24, 25).

3. Device according to claim 1 or 2, wherein the third pinion (27) comprises a first crown having internal teeth (36) intended to be in mesh with the first pinion (24), and a second crown having internal teeth (37) intended to be in mesh with the second pinion (25).

4. Device according to one of claims 1 to 3, wherein the third pinion (27) comprises a crown having external teeth (35) intended to be in mesh with the driving crown (26) of the pulley (2).

5. Device according to one of claims 1 to 4, including a bearing element (30) mounted on the second pinion (25), the first pinion (24) having a protruding part (29) placed inside the bearing element (30).
